# EUROPÄISCHE PATENTANMELDUNG

(11) **EP 2 481 938 A2**
(43) Veröffentlichungstag der Anmeldung: **01.08.2012**
(21) Anmeldenummer: 12150227.2
(22) Anmeldetag: 05.01.2012
(51) Int. Cl.: F16B 25/00, F16B 13/12

(54) **Betonschraube und Verfahren zur Verankerung einer Betonschraube in einem Untergrund**

(30) Priorität: 28.01.2011 DE 102011003290
(71) Anmelder: HILTI Aktiengesellschaft, 9494 Schaan (LI)
(72) Erfinder: Rosenkranz, Falk, 9658 Wildhaus (CH); Sander, Bernhard, 81379 München (DE); Koenig, Christian, 6780 Bezau (AT)

(57) **Zusammenfassung**

Die Erfindung betrifft eine Betonschraube (10) mit einen Schaftabschnitt (12), einem Gewindeabschnitt (14), der am vorderen Ende der Betonschraube (10) angeordnet ist und mit mindestens einem Spreizschlitz (18) versehen ist, und einem Spreizelement (22), das dem Spreizschlitz (18) derart zugeordnet ist, dass das Spreizelement (22) während des Einschraubens den Spreizschlitz (18) aufweitet. Die Erfindung betrifft auch ein Verfahren und einen Tangentialschlagschrauber (30) zum Setzen einer solchen Betonschraube (10).

## Beschreibung

Die Erfindung betrifft eine Betonschraube sowie ein Verfahren zur Verankerung einer Betonschraube in einem Untergrund.

Zur Verankerung von Lasten an einer Betonwand oder -decke oder in vergleichbaren Untergründen sind Schraubanker bekannt, die typischerweise ein Gewinde aufweisen, welches sich nahezu über die gesamte Länge des Schafts erstreckt. Dies ist einerseits notwendig, da der mit einem Schraubanker erzielte Hinterschnitt im Untergrund verhältnismäßig gering ist und insbesondere in gerissenem Beton eine möglichst große gewindeumhüllende Fläche zur Verfügung stehen muss, um die Lasten in den Beton abtragen zu können, ohne ein Schubversagen entlang der Gewindeumhüllenden zu provozieren. Andererseits wird in vielen Fällen die Tragfähigkeit des Betons nicht vollständig ausgenutzt, da bei Schraubankern aufgrund des sich über die gesamte Schraubenlänge erstreckenden Gewindes ein kombinierter Versagensmechanismus zu beobachten ist, der aus einem Betonkonusausbruch in den oberen zwei Dritteln der Verankerungstiefe und einem Schubversagen im unteren Drittel der Verankerungstiefe besteht.

Auch bekannt sind Hinterschnittanker, die üblicherweise so gestaltet sind, dass entweder vorgängig oder während des Ankersetzens ein Hinterschnitt erzeugt wird. Die vorgängige Erstellung des Hinterschnitts ist nachteilig, da dieser Vorgang aufwendig ist und diverse Spezialwerkzeuge erfordert, um ihn mit der geforderten hohen Zuverlässigkeit ausführen zu können. Wenn der Hinterschnitt während des Setzens des Ankers erzeugt wird, muss der Hinterschnittanker vergleichsweise aufwendig ausgeführt werden, um sich mit der gewünschten Tiefe in den Beton einschneiden zu können. Dementsprechend ergibt sich ein hoher Herstellungsaufwand für den Hinterschnittanker, der in einigen Fällen auch mehrteilig ausgeführt ist. Außerdem ist das Setzen eines solchen Hinterschnittankers insbesondere dann mühsam, wenn ein Bewehrungstreffer vorliegt.

Aus der DE 31 39 174 ist ein Ankerbolzen bekannt, der in ein mit einer Mörtelpatrone gefülltes, zylindrisches Ankerloch eingesetzt werden soll. Am vorderen Abschnitt des Ankerbolzens ist ein Schlitz vorgesehen, in den ein Spreizkeil eingedrückt werden kann. Der Spreizkeil steht im Ausgangszustand über das vordere Ende des Ankerelements hervor, sodass er, wenn das Ankerelement in das Bohrloch gedrückt wird, das vordere Ende des Ankerelements pilzförmig aufweitet. Auf diese Weise wird ein Hinterschnitt erzeugt, der in einer in das Bohrloch eingebrachten Mörtelfüllung verankert wird.

Die Aufgabe der Erfindung besteht darin, einen Anker zu schaffen, der in Beton oder ähnlichen Untergründen eingesetzt werden kann und die Aufnahme von hohen Lasten ermöglicht, ohne hohe Herstellungskosten zu erfordern.

Zur Lösung dieser Aufgabe ist erfindungsgemäß ein Betonanker vorgesehen mit einen Schaftabschnitt, einem Gewindeabschnitt, der am vorderen Ende des Betonankers angeordnet und mit mindestens einem Spreizschlitz versehen ist, und einem Spreizelement, das dem Spreizschlitz derart zugeordnet ist, dass das Spreizelement während des Einschraubens den Spreizschlitz aufweitet. Dieser Betonanker beruht auf dem Grundgedanken, den Außendurchmesser des Gewindeabschnittes variieren zu können. Beim anfänglichen Einschrauben des Gewindeabschnittes in eine Bohrung weist der Gewindeabschnitt einen kleineren Durchmesser auf, sodass sich ein guter Anschnitt ergibt. Nachdem der Gewindeabschnitt ausreichend weit in das Bohrloch eingeschraubt ist, wird das Spreizelement aktiviert, so dass der Gewindeabschnitt aufgespreizt wird und einen größeren Außendurchmesser hat. Dies führt dazu, dass sich der Gewindeabschnitt mit einem größeren Hinterschnitt in den Untergrund einschneidet. Dieser große Hinterschnitt kann schnell und mit wenig Aufwand in großer Verankerungstiefe erzeugt werden, so dass wettbewerbsfähige Lasten abgetragen werden können.

In einer Ausführungsform ist der Schaftabschnitt mit einem Aktivierungskanal versehen, durch den hindurch das Spreizelement von der vom Gewindeabschnitt abgewandten Seite aktiviert werden kann. Hierdurch kann die Aufweitung von Seiten des Schraubenkopfes gesteuert werden. Dies führt insbesondere dazu, dass die Aufweitung gesteuert und variabel möglich und von der Bohrlochtiefe unabhängig ist.

Hierbei ist das Spreizelement vorzugsweise ein Dorn, der durch den Aktivierungskanal nach vorne zum Gewindeabschnitt hin verschiebbar ist. Diese Ausgestaltung zeichnet sich durch einen einfachen und kostengünstigen Aufbau aus.

In einer weiteren Ausführungsform ist das Spreizelement ein am vorderen Ende der Betonschraube angeordneter Dorn, der beim Auftreffen auf den Grund der Bohrung in den Spreizschlitz gedrückt wird und es hierbei zur Aufweitung des Gewindeabschnittes kommt. Hierdurch entfällt ein Aktivierungskanal, was zu einer geringeren Schwächung der Betonschraube führt.

Gemäß einer bevorzugten Ausführungsform ist vorgesehen, dass der Gewindeabschnitt kürzer ist als der Schaftabschnitt. Dies gewährleistet, dass die Lasten ausschließlich in der Tiefe des Bohrlochs übertragen werden, so dass eine größere Festigkeit erzielt wird. Außerdem muss nicht der gesamte Schaft des Betonankers mit dem Gewinde versehen werden, was die Herstellungskosten verringert.

Das Gewinde des Gewindeabschnitts ist vorzugsweise ein selbstschneidendes Gewinde. Dies ermöglicht, auf ein vorgängiges Schneiden des Gewindes zu verzichten.

Zur Lösung der oben genannten Aufgabe ist auch ein Verfahren zur Verankerung eines Betonankers in einem Untergrund vorgesehen, bei dem der Betonanker in eine vorhandene Bohrung eingeschraubt wird und während des Einschraubens das Spreizelement in den Spreizschlitz getrieben wird. Hinsichtlich der sich ergebenden Vorteile wird auf die obigen Erläuterungen verwiesen.

Der Betonanker kann mittels eines Tangentialschlagschraubers eingeschraubt werden, mit dem auch das Spreizelement in den Spreizschlitz getrieben wird. Dies ermöglicht, den Betonanker automatisiert zu setzen.

Dabei wird besonders bevorzugt, wenn das Spreizelement gegen Ende des Einschraubens in den Spreizschlitz getrieben wird. Auf diese Weise wird der große Hinterschnitt des Gewindeabschnittes erst in der Tiefe des Bohrlochs herbeigeführt, sodass sich eine große Belastbarkeit ergibt.

Bevorzugt wird das Spreizelement bei dessen Auftreffen auf den Grund der Bohrung in den Spreizschlitz getrieben. Dies vereinfacht das Verfahren, da die Aufweitung des Gewindeabschnittes ohne weitere Verfahrensschritte durchgeführt werden kann.

Erfindungsgemäß ist auch ein Tangentialschlagschrauber vorgesehen, der ein Betätigungselement aufweist, mit dem ein Spreizelement eines Betonankers aktiviert werden kann. Ein solcher Tangentialschlagschrauber ermöglicht das automatisierte Setzen des Betonankers, da bei Erreichen einer vorbestimmten Einschraubtiefe automatisch das Spreizelement aktiviert werden kann, so dass sich in der korrekten Tiefe der große Hinterschnitt ergibt.

Die Erfindung wird nachfolgend anhand einer Ausführungsform beschrieben, die in den beigefügten Zeichnungen dargestellt ist. In diesen zeigen:
- Figur 1 in einem schematischen Schnitt einen Betonanker zu Beginn des Setzens;
- Figur 2 in einer schematischen Seitenansicht den Gewindeabschnitt des Betonankers von Figur 1;
- Figur 3 den Betonanker von Figur 1 gegen Ende des Setzens und
- Figur 4 in einem schematischen Schnitt den Setzvorgang eines Betonankers in einer weiteren Ausführungsform.

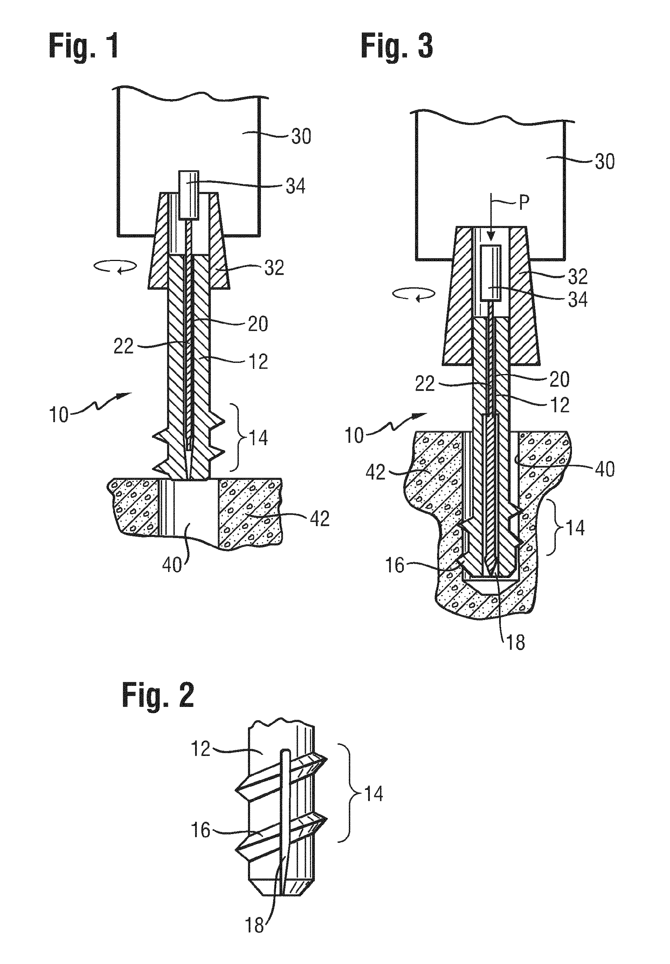

In den Figuren 1 und 2 ist ein Betonanker 10 gezeigt, der einen Schaftabschnitt 12 und einen Gewindeabschnitt 14 aufweist. Der Gewindeabschnitt 14 befindet sich am vorderen Ende des Betonankers, und das entgegengesetzte hintere Ende dient dazu, eine Last zu befestigen. Zu diesem Zweck kann das hintere Ende beispielsweise mit einem Innengewinde, einem Außengewinde oder auch einem Sechskantkopf versehen sein.

Der Gewindeabschnitt 14 enthält hier ein eingängiges Gewinde mit einem Gewindegang 16, der hier vergleichsweise wenige Windungen aufweist, beispielsweise zwei bis vier Windungen. Der Schaftabschnitt 12 ist gewindefrei.

Ausgehend vom vorderen Ende des Betonankers erstreckt sich ein Spreizschlitz 18 diametral durch den Gewindeabschnitt 14, sodass der Betonanker 10 in einer Vorderansicht gebildet ist durch zwei annähernd halbkreisförmige Segmente, die auf der einen und der anderen Seite des Spreizschlitzes 18 liegen. Der Spreizschlitz 18 endet etwa im Bereich des Übergangs vom Gewindeabschnitt 14 in den gewindefreien Schaftabschnitt 12. Am entgegengesetzten Ende, also am vorderen Ende des Betonankers, verengt sich der Spreizschlitz 18 (siehe auch Figur 1).

Der Betonanker 10 besteht hierbei insgesamt aus einem konventionellen C-Stahl und kann besonders im Bereich des Gewindeabschnitts 14 gehärtet sein. Alternativ ist auch der Einsatz von nichtrostendem Stahl möglich. Das vom Gewindegang 16 gebildete Gewinde ist dabei selbstschneidend ausgeführt.

Mittig durch den Schaftabschnitt 12 erstreckt sich entlang der Längsachse des Betonankers 10 ein Aktivierungskanal 20, der bis zum Spreizschlitz 18 führt. Im Aktivierungskanal 20 ist ein Spreizelement 22 angeordnet, das hier als langgestreckter Dorn ausgeführt ist, der mit seinem vorderen Ende geringfügig in den Spreizschlitz 18 hineinragt und mit seinem hinteren Ende aus dem hinteren Ende des Betonankers 10 heraussteht.

Zum Setzen des Betonankers 10 kann ein hier schematisch gezeigter Tangentialschlagschrauber 30 verwendet werden, der ein Spannfutter 32 aufweist, in das der Betonanker eingespannt werden kann. Zusätzlich weist der Tangentialschlagschrauber 30 ein Betätigungselement 34 auf, das auf das Spreizelement 22 einwirken kann.

Wenn der Betonanker 10 gesetzt werden soll, wird er mit dem Tangentialschlagschrauber 30 in eine Bohrung 40 eingeschraubt, die vorher in einem mineralischen Untergrund 42 wie Beton erstellt wurde. Der Durchmesser der Bohrung 40 ist dabei so auf den Außendurchmesser des Gewindeabschnitts 14 abgestimmt, dass sich der Gewindeabschnitt 14 mit einem vergleichsweise geringen Hinterschnitt in die Bohrung 40 einschraubt. Dies gewährleistet einen guten Anschnitt zu Beginn des Setzens.

Wenn der Betonanker 10 tiefer in die Bohrung 40 eingeschraubt ist, wird das Betätigungselement 34 des Tangentialschlagschraubers 30 aktiviert, sodass das Spreizelement 22 in der Richtung des Pfeils P nach vorne geschoben wird. Dadurch wird der Spreizschlitz 18 geweitet, und die beiden Segmente mit dem Gewindegang 16 werden auseinandergedrückt, wodurch sich der Außendurchmesser des Gewindegangs 16 des Gewindeabschnitts 14 vergrößert. Dies erzwingt, dass sich das vom Gewindegang 16 gebildete Gewinde mit einem größeren Hinterschnitt in die Wandung der Bohrung 40 im Untergrund 42 einschneidet. Somit wird in großer Verankerungstiefe ein ausgeprägter Gewindehinterschnitt erzeugt, mit dem hohe Lasten abgetragen werden können. Da der Lasteintrag sehr tief im Beton erfolgt, ist ein Versagensrisiko sehr gering. Insgesamt ergibt sich eine gute Verankerungsleistung in ungerissenem und in gerissenem Beton. Da keine hohen Spreizkräfte in der Bohrung erzeugt werden, können geringe Achs- und Randabstände gewählt werden.

Alternativ zur gezeigten Ausgestaltung kann der Gewindeabschnitt 14 des Betonankers 10 auch mehrfach geschlitzt sein.

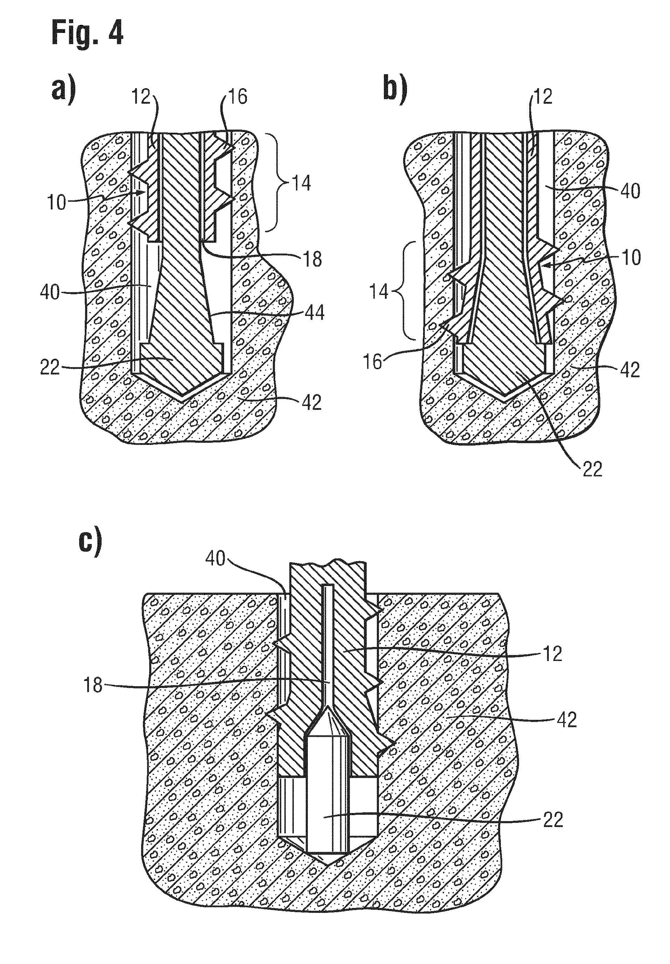

Die Figuren 4 a) und b) zeigen den vorderen Abschnitt eines Betonankers 10, bei welchem zur Aufweitung des Spreizschlitzes 18 ein am Grund der Bohrung 40 aufstehendes Spreizelement 22 verwendet wird.

Dabei ist das Spreizelement 22 frei entlang der Längsachse verschiebbar am vorderen Ende des Betonankers 10 geführt. Der Spreizschlitz 18 teilt den Betonanker 10 im Bereich des Gewindeabschnittes 14 in mehrere Segmente, was ein Aufweiten dieses Bereiches ermöglicht.

Zu Beginn des Schraubvorganges (nicht dargestellt) wird der Betonanker 10 in die Bohrung 40 eingeführt und in einem nicht aufgeweiteten Zustand mit kleinem Außendurchmesser im Bereich des Gewindeganges 16 eingeschraubt. In einer gewissen Tiefe stößt dann das Spreizelement 22 auf dem Grund der Bohrung 40 auf (Fig. 4 a)); bei weiterem Einschrauben des Betonankers 10 wird der Gewindeabschnitt 14 durch den Konus 44 des nunmehr eingeschobenen Spreizelementes 22 aufgeweitet. Hierdurch vergrößert sich der Außendurchmesser des Gewindeganges 16 des Gewindeabschnitts 14. Dies erzwingt auch hier einen größeren Hinterschnitt des Gewindes mit der Wandung der Bohrung 40 im Untergrund 42. Die Verankerungstiefe und die Größe des Hinterschnitts kann über die Länge des Spreizelementes22 und dessen Form gesteuert werden.

Figur 4 c) zeigt einen Betonanker 10 der selben Ausgestaltungsform, wobei das Spreizelement 22 andere Form und Länge aufweist. Deutlich ist zu erkennen, dass bei dieser Ausgestaltungsform der Spreizschlitz 18 nur im vorderen Bereich des Betonankers 10 notwendig ist und der restliche Bereich des Betonankers 10 somit nicht geschwächt wird. Im Vergleich zur Ausgestaltungsform der Figur 1 entfällt zudem auch der dort gezeigte Aktivierungskanal.

## Patentansprüche

1. Betonschraube (10) mit einen Schaftabschnitt (12), einem Gewindeabschnitt (14), der am vorderen Ende der Betonschraube (10) angeordnet ist und mit mindestens einem Spreizschlitz (18) versehen ist, und einem Spreizelement (22), das dem Spreizschlitz (18) derart zugeordnet ist, dass das Spreizelement (22) während des Einschraubens den Spreizschlitz (18) aufweitet.

2. Betonschraube (10) nach Anspruch 1, **dadurch gekennzeichnet, dass** der Schaftabschnitt (12) mit einem Aktivierungskanal (20) versehen ist, durch den hindurch das Spreizelement (22) von der vom Gewindeabschnitt (14) abgewandten Seite aktiviert werden kann.

3. Betonschraube (10) nach Anspruch 1 oder 2, **dadurch gekennzeichnet, dass** das Spreizelement (22) ein Dorn ist, der durch den Aktivierungskanal (20) nach vorne zum Gewindeabschnitt (14) hin verschiebbar ist.

4. Betonschraube (10) nach Anspruch 1, **dadurch gekennzeichnet, dass** das Spreizelement (22) ein derart am vorderen Ende der Betonschraube (10) angeordneter Dorn ist, dass der Dorn sich bedingt durch sein Auftreffen am Bohrungsgrund in den Spreizschlitz (18) bewegt.

5. Betonschraube (10) nach einem der vorhergehenden Ansprüche, **dadurch gekennzeichnet, dass** der Gewindeabschnitt (14) kürzer ist als der Schaftabschnitt (12).

6. Betonschraube (10) nach einem der vorhergehenden Ansprüche, **dadurch gekennzeichnet, dass** der Schaftabschnitt (12) kein Gewinde aufweist.

7. Betonschraube (10) nach einem der vorhergehenden Ansprüche, **dadurch gekennzeichnet, dass** der Gewindegang (16) des Gewindeabschnittes (14) ein selbstschneidendes Gewinde bildet.

8. Verfahren zur Verankerung einer Betonschraube (10) nach einem der vorhergehenden Ansprüche in einem Untergrund, **dadurch gekennzeichnet, dass** die Betonschraube (10) in eine vorhandene Bohrung (40) eingeschraubt wird und dass während des Einschraubens das Spreizelement (22) in den Spreizschlitz (18) getrieben wird.

9. Verfahren nach Anspruch 8, **dadurch gekennzeichnet, dass** die Betonschraube (10) mittels eines Tangentialschlagschraubers (30) eingeschraubt wird und dass das Spreizelement (22) vom Tangentialschlagschrauber (30) in den Spreizschlitz (18) getrieben wird.

10. Verfahren nach einem der Ansprüche 8 und 9, **dadurch gekennzeichnet, dass** das Spreizelement (22) gegen Ende des Einschraubens in den Spreizschlitz (18) getrieben wird.

11. Verfahren nach Anspruch 8, **dadurch gekennzeichnet, dass** das Spreizelement (22) bedingt durch dessen Auftreffen auf dem Grund der Bohrung (40) in den Spreizschlitz (18) getrieben wird.

12. Tangentialschlagschrauber (30) mit einem Spannfutter (32) und einem Betätigungselement (34), mit dem ein Spreizelement (22) eines Betonankers (10) betätigt werden kann.
